**Europäisches Patentamt**

**European Patent Office**

**Office européen des brevets**

(19)

(11) Veröffentlichungsnummer : **0 453 779 B1**

(12)

# EUROPÄISCHE PATENTSCHRIFT

(45) Veröffentlichungstag der Patentschrift :
**08.06.94 Patentblatt 94/23**

(51) Int. Cl.$^5$ : **E03F 3/06**

(21) Anmeldenummer : **91104593.8**

(22) Anmeldetag : **23.03.91**

(54) **Verfahren und Vorrichtung zum Ausfräsen der Innenwand eines unterirdisch verlegten Kanalrohres.**

(30) Priorität : **25.04.90 DE 4013128**

(43) Veröffentlichungstag der Anmeldung :
**30.10.91 Patentblatt 91/44**

(45) Bekanntmachung des Hinweises auf die
Patenterteilung :
**08.06.94 Patentblatt 94/23**

(84) Benannte Vertragsstaaten :
**AT CH DE FR GB LI**

(56) Entgegenhaltungen :
**EP-A- 0 269 172**
**EP-A- 0 315 038**
**WO-A-88/10393**
**DE-A- 2 545 363**
**DE-A- 3 835 459**

(73) Patentinhaber : **ELHA-MASCHINENBAU
LIEMKE KG
Allee 16
D-33161 Hövelhof (DE)**

(72) Erfinder : **Müller, Franz Peter
Rosentalgasse 11/6
A-1170 Wien (AT)**

(74) Vertreter : **Stracke, Alexander, Dipl.-Ing. et al
Jöllenbecker Strasse 164
D-33613 Bielefeld (DE)**

**Beschreibung**

Die vorliegende Erfindung betrifft ein Verfahren zum Ausfräsen der Innenwand eines unterirdisch verlegten Kanalrohres sowie eine Vorrichtung zur Durchführung des Verfahrens.

Zur Sanierung von Kanalrohren, insbesondere von solchen, die einen von der Kreisform abweichenden, beispielsweise eiförmigen Querschnitt besitzen, ist es aus einem nicht vorveröffentlichten Stand der Technik bekannt (siehe EP-A-0 395 628), die Innenwand beispielsweise mit einem flüssigen Polymerbeton zu beschichten.

Um den lichten Querschnitt des Kanalrohres nicht zu verringern, wird mittels eines Fräskopfes, der entsprechend der Kontur der Innenwand geführt wird, diese entsprechend der aufzutragenden Schichtdicke ausgefräst.

Dabei wird der die Innenwand vollflächig ausfräsende Fräskopf nach einmaligem Umlauf um die Fräskopfbreite weiterbewegt, so daß das Ausfräsen praktisch abschnittsweise erfolgt.

Aufgrund der relativ hohen Herstellungskosten des diamantbestückten Fräskopfes einerseits und aufgrund der enormen auftretenden Kräfte beim Ausfräsen andererseits muß der Fräskopf relativ schmal gehalten bleiben, so daß eine häufige Arbeitsunterbrechung zum Zwecke des Vorschubs der Vorrichtung erforderlich wird.

Dadurch bedingt werden die Kosten für eine Kanalrohrsanierung in hohem Maße ungünstig beeinflußt.

Ein weiterer Nachteil dieses Verfahrens liegt überdies darin, daß aufgrund des über die gesamte Breite des Fräskopfes erfolgenden Eingriffs der Verschleiß sehr hoch ist, was naturgemäß eine weitere Erhöhung der Betriebskosten zur Folge hat.

Aus der DE-A-25 45 363 ist zwar eine Vorrichtung und ein Verfahren zum Ausfräsen der Innenwand eines Tunnels bekannt, doch erfolgt dieses Aufräsen nicht umlaufend, sondern in Längsachsrichtung des Tunnels, so daß sich aus dieser Schrift keine Lösungsmöglichkeiten herleiten lassen, mit denen die erwähnten Probleme gelöst werden könnten.

Der vorliegenden Erfindung liegt die Aufgabe zugrunde, ein Verfahren zu schaffen, mit dem die Arbeitsleistung der Vorrichtung erhöht, die Standzeit des Fräskopfes verbessert und dessen Herstellungskosten gesenkt werden.

Diese Aufgabe wird durch ein Verfahren gelöst, daß die Merkmale des Anspruches 1 aufweist.

Durch diese Verfahrensschritte ist es nun möglich, in einem Bearbeitungsumlauf des Fräskopfes eine in ihrer Breite größere Fläche auszufräsen, ohne daß eine gegenüber dem Stand der Technik höhere Kraft erforderlich wird. Dabei wird nach dem Einsatzende des Fräskopfes die Vorschubbewegung der gesamten Vorrichtung, die im Grunde erforderlich ist, um den Fräskopf in eine neue Position zu bringen, dazu benutzt, die beim Fräsen entstandenen Zwischenstege abzuscheren.

Bei entsprechender Ausgestaltung des Fräskopfes, das heißt, daß die nebeneinanderliegenden, umlaufenden Zahnreihen in ihrer Gesamtbreite etwa der Gesamtbreite der Abstände zwischen den Zahnreihen entspricht, kann ohne weiteres die Vorschubleistung der Vorrichtung verdoppelt werden, wenn nämlich die Gesamtbreite der zum Einsatz kommenden Zähne der Gesamtbreite des Fräskopfes entspricht, der bislang zum Einsatz kommt.

Aufgrund der Möglichkeit, die Zahnreihen schmal zu halten, wird auch die Beanspruchung der einzelnen Zähne reduziert, was eine erhebliche Erhöhung der Standzeit zur Folge hat.

Die Standzeit des Fräskopfes wird noch dadurch erhöht, daß nach einer vorteilhaften Ausgestaltung der Erfindung vorgesehen ist, daß die Geschwindigkeit, mit der der Fräskopf an der Innenwand des Kanalrohres entlangläuft, elektronisch überwacht wird, so daß ein konstanter Schneiddruck am Umfang des Fräskopfes erreicht und der Werkzeugverschleiß erheblich vermindert wird.

Erfindungsgemäß wird eine Vorrichtung zur Durchführung des Verfahrens durch die Merkmale des Anspruchs 2 definiert. Diese Vorrichtung sieht vor, daß eine der Querschnittskontur der ausgefrästen Innenwand angepaßte Schneide vorgesehen ist, die mit einer, im Kanalrohr verspannbaren Vorschubeinrichtung verbunden ist.

Zweckmäßigerweise besteht die Schneidkante, mit der nach dem Ausfräsen die Zwischenstege abgeschert werden, aus einem extrem verschleißfähigen Material.

Von Vorteil ist es, wenn die Schneide lösbar mit einem sich über den Umfang der Innenwand erstreckenden Schildmantel verbunden ist, so daß sie bei Bedarf, beispielsweise zum Nachschärfen, ausgewechselt werden kann.

Die Vorschubeinrichtung, die mit dem Schildmantel verbunden ist, ist wechselweise im Zusammenwirken mit dem Schildmantel im Kanalrohr verspannbar.

Mit der Vorschubeinrichtung, die sich in Funktionsstellung beispielsweise durch sich gegenüberliegende Stempel an der Innenwand des Kanalrohres abstützt, wird sowohl der Schildmantel, der dann frei in Längsachsrichtung des Kanalrohres bewegbar ist, als auch die Schneide und der Fräskopf vorgeschoben, wobei die Schneide über den gesamten Umfang die Zwischenstege abschert.

Um den anfallenden Abraum abzufördern, sieht ein weiteres kennzeichnendes Merkmal der Erfindung vor, daß auf der dem Kanalboden zugewandten Seite des Schildmantels eine Fördervorrichtung angeordnet ist.

Diese kann beispielsweise absaugend wirken, wobei der Abraum durch zugeführte, den Fräskopf kühlende Flüssigkeit aufgemischt und besser transportierbar wird.

Weitere vorteilhafte Ausgestaltungen der Erfindung sind in den Unteransprüchen gekennzeichnet.

Das Verfahren sowie die Vorrichtung zur Durchführung des Verfahrens werden nachfolgend anhand der beigefügten Zeichnungen beschrieben.

Es zeigen:

| Fig. 1 | einen schematisierten Längsschnitt durch eine Vorrichtung zur Durchführung des erfindungsgemäßen Verfahrens, |
| Fig. 2 | eine Rückansicht auf die Vorrichtung gesehen in Richtung des Pfeiles II in Figur 1, |
| Fig. 3 | einen Querschnitt durch die Vorrichtung gemäß der Linie III-III in Figur 1, |
| Fig. 4 | eine teilweise Vorderansicht auf die Vorrichttung gesehen in Richtung des Pfeiles IV in Fig. 1, |
| Fig. 5 | einen Querschnitt durch den Fräskopf, |
| Fig. 6 | einen Längsschnitt durch den Fräskopf gemäß der Linie VI-VI in Figur 5, |
| Fig. 7 | eine Nabe des Fräskopfes in einer Seitenansicht, |
| Fig. 8 | die Nabe in einer Vorderansicht. |

Die in den Figuren dargestellte Vorrichtung zum Ausfräsen der Innenwand eines unterirdisch verlegten Kanalrohres 4 besteht in ihrem Grundaufbau aus einem etwa der Querschnittskontur angepaßten Schildmantel 3, der sich über den gesamten Umfang des Kanalrohres 4 erstreckt. Das Kanalrohr 4 ist im vorliegenden Ausführungsbeispiel im Querschnitt etwa eiförmig ausgebildet.

An dem dem auszufräsenden Bereich des Kanalrohres 4 zugewandten Ende ist an dem Schildmantel 3 eine Schneide 2 festgelegt, dessen freier, umlaufender Endbereich eine Schneidkante aufweist.

In dem durch den Schildmantel 3 gebildeten Innenraum ist in dessen Längsachsrichtung sich erstreckend eine Hohlwelle 8 angeordnet, die sowohl einen Schwenkantrieb 12 als auch einen Hydraulikzylinder 9 trägt, dessen Kolben an einem Getriebe 10 angeschlossen ist, an dessen Eingang ein Hydraulikmotor 11 und an dessen Ausgang ein Fräskopf 1 befestigt wird.

Dieser wird durch den Hydraulikmotor 11 über das Getriebe 10 angetrieben, während der Schwenkmotor 12 für die Drehbewegung der gesamten Einheit um die Hohlwelle 8 sorgt.

Die entsprechend der Querschnittskontur des Kanalrohres 4 unterschiedlichen Abstände zur Hohlwelle 8 und damit das eigentliche Ausfräsen des Kanalrohres 4 dieser Querschnittskontur entsprechend, wird duch einen Stellantrieb, der im vorliegenden Ausführungsbeispiel als Hydraulikzylinder 9 ausgebildet ist, bewirkt.

Dabei kann die Bewegung des Hydraulikzylinders 9, also das Ein- und Ausfahren des Kolbens und somit die Hin- und Herbewegung des angeschlossenen Hydraulikmotors 11, des Getriebes 10 und des Fräskopfes 1, rechnergesteuert sein, wobei der Konturenverlauf vor dem Ausfräsen beispielsweise durch geeignete Meßmethoden, wie Abtastung durch Laserstrahlen oder dergleichen, programmiert sein kann.

Aus Stabilitätsgründen ist die Fräseinheit, bestehend aus dem Hydraulikmotor 11, dem Getriebe 10 und dem Fräskopf 1 an einem Führungsrohr 16 befestigt, das in mit der Hohlwelle 8 verbundenen Führungshülsen 17 längsverschiebbar gelagert ist. Die Führungshülsen 17 sind an einem stirnseitig mit der Hohlwelle 8 festgelegten Flansch 21 befestigt.

Über Stützen 7, die, wie im Ausführungsbeispiel dargestellt, eine Dreipunktauflage bilden können und die an der ausgefrästen Innenwand des Kanalrohres 4 anliegen, wird die gesamte Vorrichtung während des Ausfräsvorganges fest verspannt. Dabei durchtreten die Stützen 7 den Schildmantel 3, wobei sich zwischen der ausgefrästen Innenwand des Kanalrohres 4 und der Außenseite des Schildmantels 3 ein Ringspalt bildet.

Im rückwärtigen Bereich des Schildmantels 3, also dem dem Fräskopf 1 abgewandten, ist eine Vorschubeinrichtung 5 vorgesehen, die in Längsachsenrichtung der Hohlwelle 8 verlaufende Hydraulikzylinder 13 aufweist, die kolbenseitig mit einem, den Schildmantel 3 tragenden Gestellrahmen 22 verbunden sind.

An dem Gestellrahmen 22 ist gleichfalls ein Führungsholm 14 festgelegt, auf dem die gesamte Vorschubeinrichtung führbar angeordnet ist.

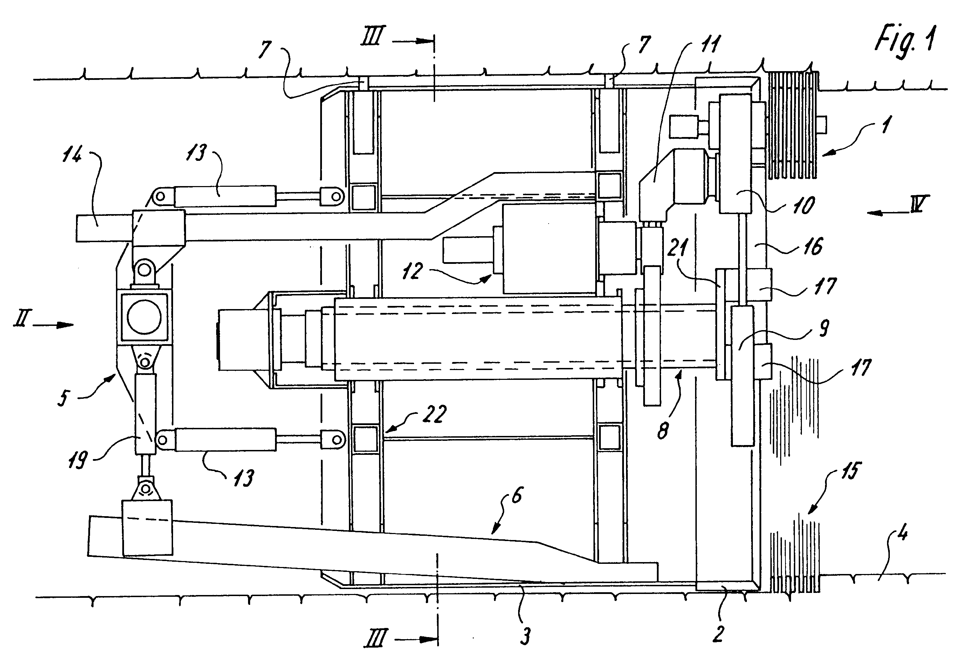

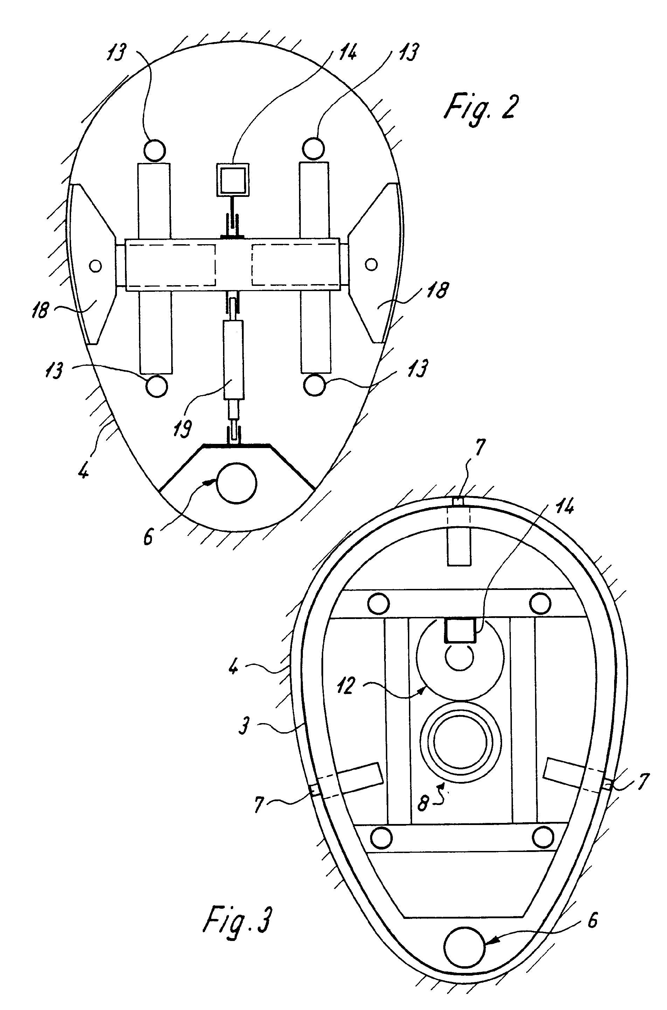

Wie insbesondere aus der Figur 2 erkenntlich ist, ist die Vorschubeinrichtung mit querverlaufenden, sich an den Seiten des Kanalrohres 4 abstützenden Stempeln 18 versehen, die hydraulisch oder pneumatisch an die Innenwand des Kanalrohres 4 andrückbar sind.

Mittels eines weiteren Hydraulikzylinders 19 kann eine Höhenkorrektur vorgenommen werden, mit der eine Anpassung der Vorrichtung an eine mögliche Niveauänderung vorgenommen werden kann.

Eine Anpassung an den seitlichen Verlauf des Kanalrohres, beispielsweise die Berücksichtigung von Kurvenradien, wird durch die getrennte Steuerung der beiden Stempel 18 ermöglicht.

Am Grund des Schildmantels 3, und zwar mit einer Aufnahmeöffnung im Bereich der Schneide 2, ist eine Fördereinrichtung 6 angeordnet, durch die der beim Ausfräsen anfallende Abraum entsorgt werden kann.

Die Fördereinrichtung 6 kann eine Pumpe enthalten, die den Abraum absaugt, wobei dieser durch ein Kühlmittel verflüssigt sein kann.

Dieses Kühlmittel wird durch eine nicht dargestellte Zuleitung, die durch die Hohlwelle 8 geführt ist, dem Fräskopf 1 zugeführt.

Denkbar ist aber auch, daß eine separate Spülung, deren Zuleitung gleichfalls durch die Hohlwelle 8 geführt ist, den Abraum ausspült und für ein Abpumpen verflüssigt.

Die Funktionsweise der Vorrichtung bzw. die Schritte des erfindungsgemäßen Verfahrens seien nachfolgend beschrieben:

Zunächst wird die Vorrichtung in eine Arbeitsposition gebracht, in der durch den Fräskopf 1 die Innenwand des Kanalrohres 4 ausgefräst werden soll. Sodann erfolgt ein Festklemmen des Schildmantels 3 durch die vorzugsweise hydraulisch betätigbaren Stützen 7. Der Fräskopf 1 wird durch den Hydraulikmotor 11 und das zwischengeschaltete Getriebe 10 in Rotation versetzt und entsprechend einer programmierten Querschnittskontur über den Umfang der Innenwand des Kanalrohres 4 geführt, wobei die Abstandsveränderungen, insbesondere bei elliptischen oder eiförmigen Querschnitten des Kanalrohres 4 durch die bereits geschilderte Hin- und Herbewegung des Hydraulikzylinders 9 vollzogen werden.

Der Fräskpf 1 ist so gestaltet, daß während des Umlaufs zur Herstellung einer Ausfräsung 15, eine Mehrzahl von nebeneinanderliegenden Rillen entstehen.

Nach einmaligem Umlauf des Fräskopfes über den gesamten Umfang wird der Fräskopf 1 aus dem Arbeitsbereich gezogen.

Im Anschluß daran wird die Vorschubeinrichtung 5 mittels der Stempel 18 im Kanalrohr 4 verspannt, die Stützen 7 werden aus ihrer Verspannung gelöst und der Schildmantel 3, zusammen mit dem Fräskopf 1 um die Fräskopfbreite vorgeschoben.

Dabei werden die beim Ausfräsen entstandenen Zwischenstege der Ausfräsung 15 durch die vor dem Schildmantel 3 angeordnete Schneide 2 abgeschert, so daß sich entsprechend der Schildmantelschneidenkontur ein weitgehend gleichmäßig vergrößerter Innenquerschnitt des Kanalrohres 4 ergibt. Um die Kraft zum Abscheren der Stege möglichst niedrig zu halten, ist die Schneide 2 am Schildmantel 3 so ausgebildet, daß die Stege zunächst im unteren Bereich des Kanalrohres 4 abgeschert und dann kontinuierlich bis in den oberen Bereich abgeschert werden. Der entstandene Abraum wird während dieser Zeit bzw. auch während des Fräsvorganges durch die Fördereinrichtung 6 abgefördert.

Nachdem die Vorrichtung ihre für den nächsten Fräsvorgang richtige Arbeitsposition eingenommen hat, werden die Stützen 7 ausgefahren und der Schildmantel 3 fest mit dem Kanalrohr 4 verspannt. Danach werden die Stempel 18 gelöst und die gesamte Vorschubeinrichtung 5 in Richtung des Schildmantels 3 um die Strecke des zuvor zurückgelegten Vorschubs bewegt.

Um Arbeitszeit zu sparen, ist es sinnvoll, das Lösen und Nachziehen der Vorschubeinrichtung 5 während des Ausfräsvorganges vorzunehmen.

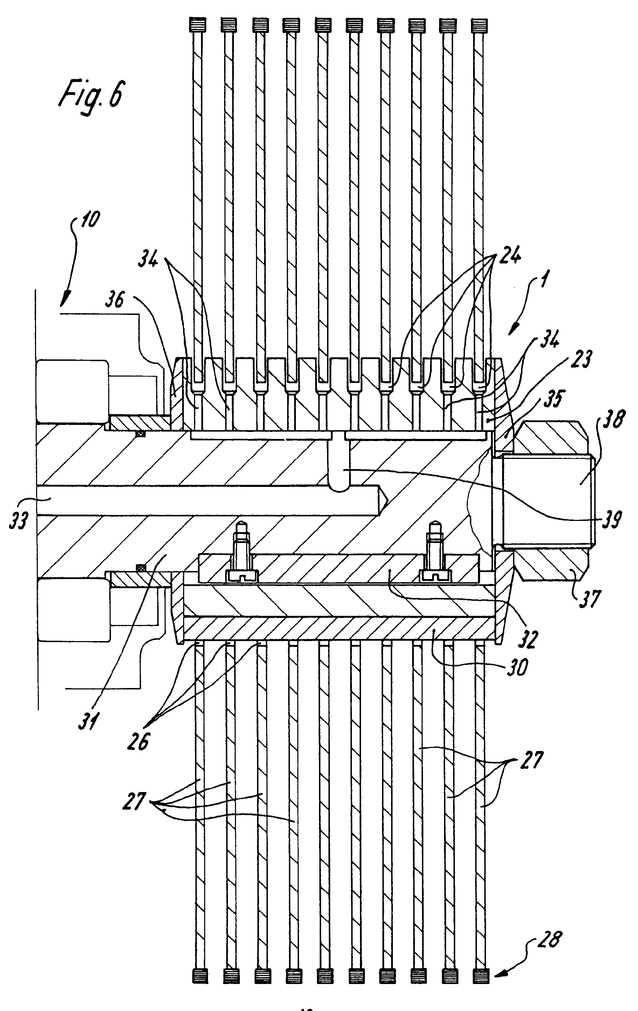

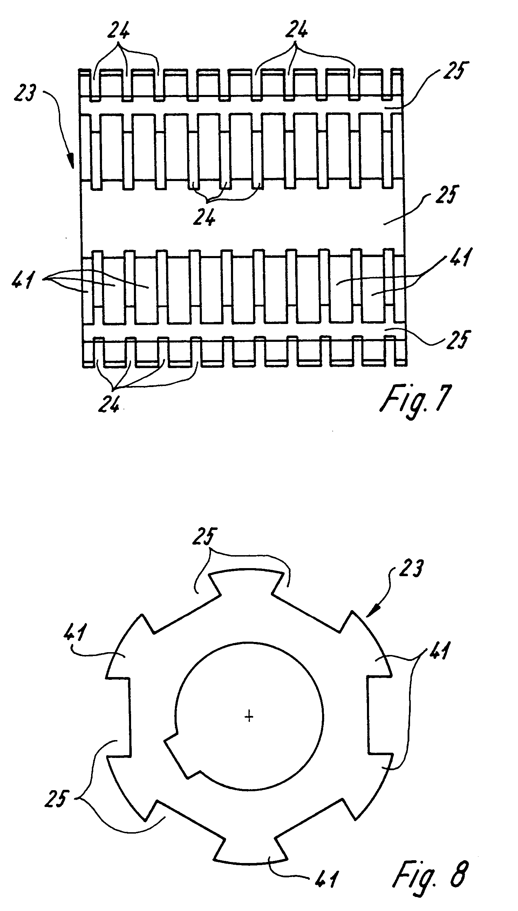

Eine besonders vorteilhafte Ausgestaltung des Fräskopfes 1 ist in den Figuren 6 bis 8 dargestellt.

Dabei weist der Fräskopf 1 eine Nabe 23 auf, die, was besonders deutlich in der Figur 7 zu erkennen ist, mit einer Vielzahl quer zur Längsachse verlaufenden Ringnuten 24 versehen ist.

Diese verlaufen parallel und mit Abstand zueinander und sind umlaufend auf dem Außenmantel angeordnet.

In jeder Ringnut 24 ist ein Schneidblatt 27 geführt, das mit einer aus Zähnen 29 gebildeten Zahnreihe 28 umfangen ist.

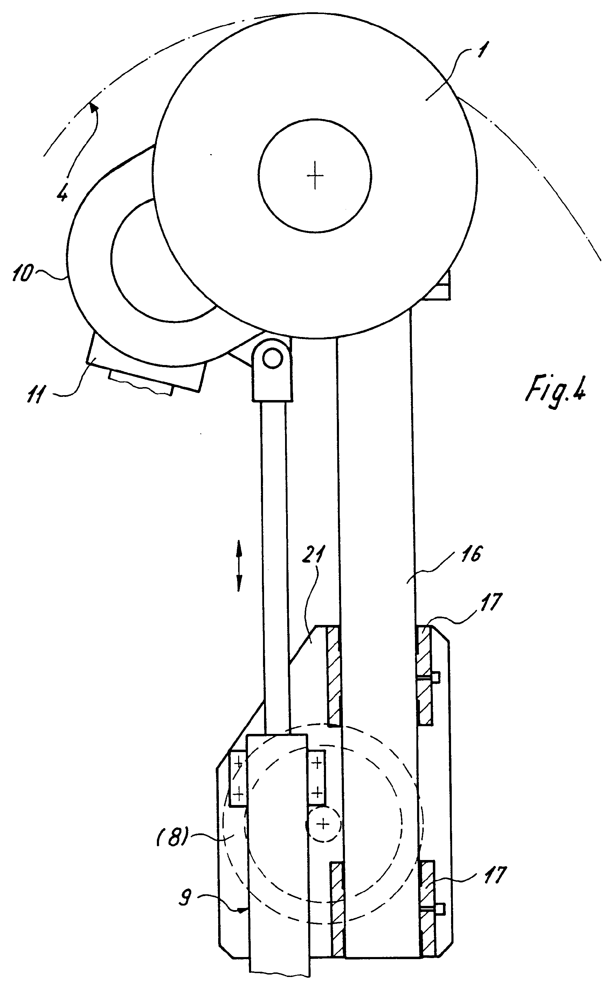

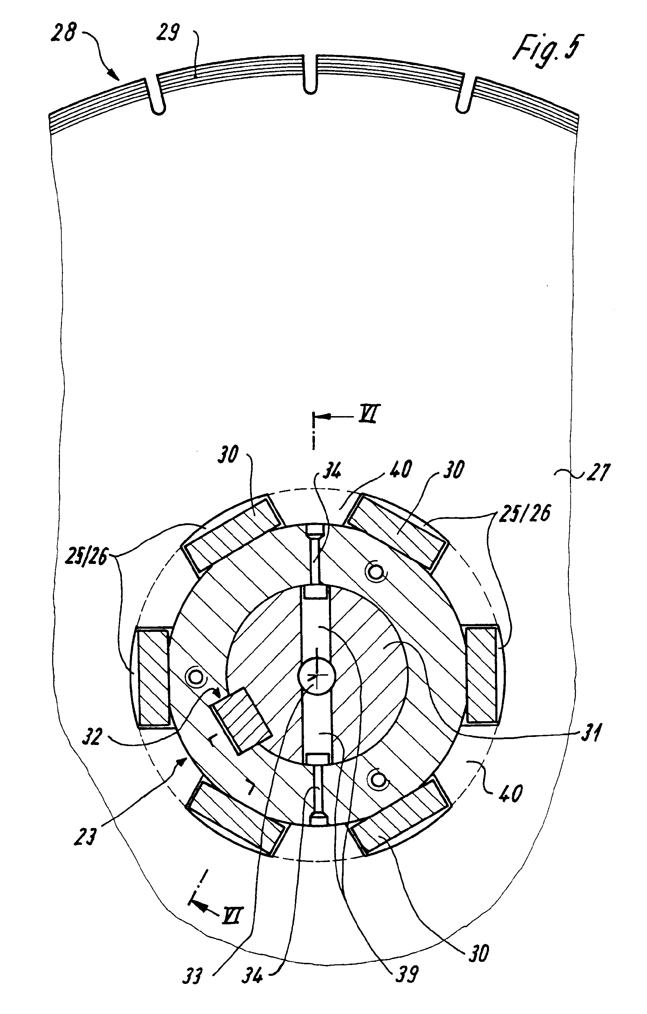

Sowohl die Nabe 23 als auch die Schneidblätter 27 sind mit sich in Längsachsrichtung der Nabe 23 erstreckenden Längsnuten 25,26 versehen, wobei die Längsnuten 25 der Nabe 23 in ihrem Querschnittsabmaß etwa dem Querschnittsabmaß der Längsnuten 26 der Schneidblätter 27 entsprechen. In einer Gebrauchsstellung des Fräskopfes, wie sie in der Figur 5 dargestellt ist, überdecken die Längsnuten 25,26 der Nabe 23 bzw. der Schneidblätter 27 einander, wobei ein sich über die gesamte Breite der Nabe 23 erstreckender Keil 30 die Längsnuten 25,26 ausfüllt und so für eine verdrehsichere Verbindung zwischen den Schneidblättern 27 einerseits und der Nabe 23 andererseits sorgt.

Die beschriebene Festlegung der Schneidblätter 27 ermöglicht ein einfaches Montieren bzw. Demontieren, was insbesondere deshalb von Vorteil ist, da die Schneidblätter 27 aufgrund der hohen Beanspruchung relativ häufig geschärft werden müssen.

Im übrigen bietet die erfindungsgemäße Art der Festlegung die Möglichkeit einer kostengünstigen Herstellung des gesamten Fräskopfes.

Zur Montage der einzelnen Schneidblätter 27 werden die zwischen zwei Längsnuten 26 eines Schneidblattes 27 gebildeten Nasen 40 in Deckung gebracht mit Längsnuten 25 der Nabe 23 und das Schneidblatt 27 soweit in Längsachsrichtung der Nabe 23 verschoben, bis es in den Bereich einer Ringnut 24 gelangt.

4

Durch Drehung in die Ringnut 24 hinein, werden die Längsnuten 25, 26 des Schneidblattes 27 bzw. der Nabe 23 in Deckung gebracht, so daß der Keil 30 eingeschoben werden kann. In dieser verdrehsicheren Gebrauchsstellung werden die Nasen 40 des Schneidblattes 27 überdeckt von Nasen 41 der Nabe 23, wobei die Nasen 41 sich ebenfalls durch den Abstand der Längsnuten 25 zueinander ergeben.

Dabei ist es wichtig, daß der Abstand dieser Längsnuten 25,26 zueinander, also die Breite der Nasen 40,41 gleichgroß oder kleiner ist als die Breite der Längsnuten 25,26.

Zweckmäßigerweise sind die Längsnuten 25,26 gleichmäßig über den Außenumfang der Nabe 23 bzw. im Bereich des Mittenloches jedes Schneidblattes 27 verteilt.

Die Nabe 23 ist auf eine Welle 31 des Getriebes 10 aufgesteckt und in bekannter Weise mittels einer Nut/Keil-Verbindung 32 verdrehsicher festgelegt.

Durch stirnseitig mit der Nabe 23 verschraubte Scheiben 35,36 werden die Keile 30 arretiert, so daß komplett montierte Fräsköpfe an der Baustelle bereitliegen können, die im Bedarfsfall auf die Welle 31 aufgeschoben und mittels einer Mutter 37, die auf einen Gewindezapfen 38 der Welle 31 aufgeschraubt wird, zu befestigen ist.

Zum Zwecke der Kühlung des Fräskopfes bzw. der Schneidblätter 27 ist in der Welle 31 eine zentral angeordnete Kühlmitteleinleitung 33 vorgesehen, an die sich ein Abzweig 39 anschließt, der kommunizierend mit Kühlmittelkanälen 34 verbunden ist, von denen mindestens eine jeweils in einer Ringnut 24 mündet.

Somit kann jedes Schneidblatt 27 beidseitig gekühlt werden.

EP 0 453 779 B1

**Bezugszeichenliste**

| | | | | |
|---|---|---|---|---|
| 1 | Fräskopf | 31 | Welle |
| 2 | Schneide | 32 | Nut/Keil-Verbindung |
| 3 | Schildmantel | 33 | Kühlmittelleitung |
| 4 | Kanalrohr | 34 | Kühlmittelkanal |
| 5 | Vorschubeinrichtung | 35 | Scheibe |
| 6 | Fördereinrichtung | 36 | Scheibe |
| 7 | Stütze | 37 | Mutter |
| 8 | Hohlwelle | 38 | Gewindezapfen |
| 9 | Hydraulikzylinder | 39 | Abzweig |
| 10 | Getriebe | 40 | Nase |
| 11 | Hydraulikmotor | 41 | Nase |
| 12 | Schwenkantrieb | | |
| 13 | Hydraulikzylinder | | |
| 14 | Führungsholm | | |
| 15 | Ausfräsung | | |
| 16 | Führungsrohr | | |
| 17 | Führungshülse | | |
| 18 | Stempel | | |
| 19 | Hydraulikzylinder | | |
| 21 | Flansch | | |
| 22 | Gestellrahmen | | |
| 23 | Nabe | | |
| 24 | Ringnut | | |
| 25 | Längsnut | | |
| 26 | Längsnut | | |
| 27 | Schneidblatt | | |
| 28 | Zahnreihe | | |
| 29 | Zahn | | |
| 30 | Keil | | |

**Patentansprüche**

1. Verfahren zum Ausfräsen der Innenwand eines unterirdisch verlegten Kanalrohres, wobei ein Fräskopf entsprechend der Querschnittskontur der Innenwand umlaufend geführt und nach einem Umlauf über den gesamten Umfang der Innenwand um seine Fräskopfbreite in Längsachsrichtung des Kanalrohres weiterbewegt wird, und wobei eine Mehrzahl von nebeneinanderliegenden Rillen in einem Umlauf gefräst, während des Weiterbewegens des Fräskopfes die entstandenen Zwischenstege in Längsachsrichtung des Kanalrohres abgeschert und der angefallene Abraum mittels einer Fördereinrichtung abgefördert wird.

6

2. Vorrichtung zur Durchführung des Verfahrens nach Anspruch 1, wobei ein Fräskopf (1) eine Mehrzahl von nebeneinanderliegenden, mit Abstand zueinander angeordneten, umlaufenden Zahnreihen (28) aufweist, daß eine der Querschnittskontur der ausgefrästen Innenwand angepaßte Schneide (2) vorgesehen ist, die mit einer Vorschubeinrichtung (5) verbunden ist, die im Kanalrohr (4) verspannbar ist, und daß auf der dem Kanalrohrboden zugewandten Seite eine Fördervorrichtung (6) zum Abfördern des Abraumes vorgesehen ist.

3. Vorrichtung nach Anspruch 2, dadurch gekennzeichnet, daß die Schneide (2) an einem sich über den Umfang der Innenwand erstreckenden Schildmantel (3) festgelegt ist, der mit der Vorschubeinrichtung (5) verbunden ist, wobei der Schildmantel (3) im Wechsel mit der Vorschubeinrichtung (5) im Kanalrohr (4) verspannbar ist.

4. Vorrichtung nach Anspruch 2, dadurch gekennzeichnet, daß der Fräskopf (1) an einem mit einer Steuereinrichtung gekoppelten, radial bewegbaren Stellantrieb angeordnet ist, der an einer Hohlwelle (8) drehbar gelagert ist.

5. Vorrichtung nach Anspruch 4, dadurch gekennzeichnet, daß der Stellantrieb aus einem Hydraulikzylinder (9), einem pneumatischen Antrieb oder einem Stellmotor gebildet ist.

6. Vorrichtung nach Anspruch 3, dadurch gekennzeichnet, daß die Schneide (2) lösbar mit dem Schildmantel (3) verbunden ist.

7. Vorrichtung nach Anspruch 2, dadurch gekennzeichnet, daß der Fräskopf (1) über einen Hydraulikmotor (11) antreibbar ist, wobei zwischen diesem und dem Fräskopf (1) ein Getriebe (10) geschaltet ist.

8. Vorrichtung nach Anspruch 2 oder 7, dadurch gekennzeichnet, daß die aus dem Hydraulikmotor (11), dem Getriebe (10) und dem Fräskopf (1) bestehende Baueinheit an einem Führungsrohr (16) festgelegt ist, die in mit der Hohlwelle (8) verbundenen Führungshülsen (17) hin- und herbewegbar geführt ist.

9. Vorrichtung nach Anspruch 2, dadurch gekennzeichnet, daß der Fräskopf (1) eine Nabe (23) aufweist, die mit einer Vielzahl, quer zur Längsachse der Nabe (23) verlaufenden, parallel und mit Abstand zueinander angeordneten, umlaufenden Ringnuten (24) versehen ist, in denen jeweils ein mit einer Zahnreihe (28) versehenes Schneidblatt (27) verdrehsicher gehalten ist.

10. Vorrichtung nach Anspruch 9, dadurch gekennzeichnet, daß die Nabe (23) mit auf ihren Außenumfang und die Schneidblätter (27) mit im Bereich ihres jeweiligen Mittenloches verteilten, sich in Längsachsrichtung der Nabe (23) erstreckenden Längsnuten (25,26) versehen sind, die in ihrem Querschnittsabmaß etwa einander entsprechen, wobei der Abstand zwischen den Längsnuten 25,26 gleichgroß oder kleiner ist als deren Breite, und daß in den in Gebrauchsstellung deckungsgleichen Längsnuten (25,26) der Nabe (23) und der Schneidblätter (27) ein Keil (30) einliegt.

11. Vorrichtung nach Anspruch 9, dadurch gekennzeichnet, daß in jede Ringnut (24) mindestens ein Kühlmittelkanal (34) mündet, der kommunizierend über einen Abzweig (39) mit einer Kühlmittelleitung (33) verbunden ist.

12. Vorrichtung nach Anspruch 3, dadurch gekennzeichnet, daß der Schildmantel (3) mit Stützen (7) versehen ist, die an die Innenwand des Kanalrohres (4) anpreßbar sind.

13. Vorrichtung nach Anspruch 12, dadurch gekennzeichnet, daß die Stützen (7) im Sinne einer Dreipunktauflage am Schildmantel (3) angeordnet sind.

14. Vorrichtung nach einem der Ansprüche 12 oder 13, dadurch gekennzeichnet, daß die Stützen (7) die Außenwand des Schildmantels (3) überragen.

15. Vorrichtung nach Anspruch 3, dadurch gekennzeichnet, daß die äußere Querschnittskontur des Schildmantels (3) der inneren Querschnittskontur des Kanalrohres (4) entspricht, wobei die entsprechende Querschnittsfläche des Schildmantels (3) kleiner ist als die Querschnittsfläche des Kanalrohres (4).

16. Vorrichtung nach Anspruch 4, dadurch gekennzeichnet, daß durch die Hohlwelle (8) eine im Bereich des Fräskopfes (1) mündende Kühlmittelzuleitung und/oder eine im Bereich der dem Fräskopf (1) zugewandten Stirnseite der Hohlwelle (8) austretende Spülmittelleitung geführt ist.

**17.** Vorrichtung nach Anspruch 2 oder 3, dadurch gekennzeichnet, daß die Vorschubeinrichtung (5) über Hydraulikzylinder (13) mit dem Schildmantel (3) verbunden ist und daß in horizontaler Ebene an der Wandung des Kanalrohres (4) anpreßbare Stempel (18) vorgesehen sind, die gleichfalls hydraulisch betätigbar sind.

**18.** Vorrichtung nach Anspruch 2 oder 17, dadurch gekennzeichnet, daß die Vorschubeinrichtung (5) auf einem in Mittelachsrichtung der Hohlwelle (8) verlaufenden Führungsholm (14) gelagert ist, wobei die Hydraulikzylinder (13) in zwei horizontalen Ebenen, jeweils beidseitig des Führungsholms (14) verlaufend angeordnet sind.

**19.** Vorrichtung nach Anspruch 2, dadurch gekennzeichnet, daß die Vorschubeinrichtung (5) vertikal verstellbar ist.

**20.** Vorrichtung nach Anspruch 2, dadurch gekennzeichnet, daß die Fördervorrichtung (6) als mit einer Saugpumpe versehene Absaugeinrichtung ausgebildet ist.

## Revendications

**1.** Procédé de fraisage de la paroi intérieure d'une canalisation souterraine, dans lequel une tête de fraisage est guidée en rotation suivant le contour de la section transversale de la paroi intérieure et, après un tour sur toute la périphérie de la paroi intérieure, est déplacée de sa largeur dans la direction de l'axe longitudinal de la canalisation, et dans lequel une pluralite de gorges juxtaposées est fraisée en un tour, les cloisons intermédiaires ainsi formées dans la direction de l'axe longitudinal de la canalisation sont cisaillées pendant le déplacement de la tête de fraisage et les déblais obtenus sont évacués au moyen d'un convoyeur.

**2.** Dispositif pour la mise en oeuvre du procédé selon la revendication 1, dans lequel une tête de fraisage (1) comporte une pluralité de rangées de dents (28) juxtaposées, espacées, tournantes, il est prévu une lame (2) adaptée au contour de la section transversale de la paroi intérieure fraisée, laquelle est reliée à un dispositif d'avance (5) qui peut être serré dans la canalisation (4) et sur le côté tourné vers le fond de la canalisation il est prévu un convoyeur (6) destiné à évacuer les déblais.

**3.** Dispositif selon la revendication 2, caractérisé en ce que la lame (2) est fixée sur un bouclier (3) s'étendant sur le pourtour de la paroi intérieure, lequel bouclier est relié au dispositif d'avance (5), le bouclier (3) pouvant être serré dans la canalisation (4), en alternance avec le dispositif d'avance (5).

**4.** Dispositif selon la revendication 2, caractérisé en ce que la tête de fraisage (1) est montée sur un mécanisme de positionnement déplaçable radialement, accouplé avec un dispositif de commande et monté tournant sur un arbre creux (8).

**5.** Dispositif selon la revendication 4, caractérisé en ce que le mécanisme de positionnement est constitué d'un vérin hydraulique (9), d'un entraînement pneumatique ou d'un servomoteur.

**6.** Dispositif selon la revendication 3, caractérisé en ce que la lame 2 est reliée de façon amovible avec le bouclier (3).

**7.** Dispositif selon la revendication 2, caractérisé en ce que la tête de fraisage (1) peut être entraînée par un moteur hydraulique (11), une transmission (10) étant montée entre celui-ci et la tête de fraisage (1).

**8.** Dispositif selon les revendications 2 ou 7, caractérisé en ce que l'unité de construction constituée du moteur hydraulique (11), de la transmission (10) et de la tête de fraisage (1) est fixée sur un tube de guidage (16), qui est guidé dans un mouvement de va-et-vient dans des douilles de guidage (17), reliées à l'arbre creux (8).

**9.** Dispositif selon la revendication 2, caractérisé en ce que la tête de fraisage (1) comporte un moyeu (23) qui est pourvu d'un grand nombre de rainures annulaires (24) périphériques, parallèles et espacées les unes des autres, disposées transversalement à l'axe longitudinal du moyeu (23), dans chacune desquelles une lame de coupe (27), pourvue d'une rangée de dents (28), est maintenue solidaire en rotation.

**10.** Dispositif selon la revendication 9, caractérisé en ce que le moyeu (23) et les lames de coupe (27) sont pourvues de rainures longitudinales (25, 26) s'étendant dans la direction de l'axe longitudinal du moyeu (23), réparties, pour le premier, sur son pourtour extérieur et pour les secondes, dans la zone de leur trou central respectif, lesquelles rainures ont à peu près la même section transversale, la distance entre les rainures longitudinales (25, 26) étant égale ou inférieure à leur largeur, et en ce que dans les rainures longitudinales (25, 26) se recouvrant en position d'utilisation, du moyeu (23) et des lames de coupe (27), se trouve un coin (30).

**11.** Dispositif selon la revendication 9, caractérisé en ce que dans chaque rainure annulaire (24) débouche au moins un canal de réfrigérant (34), qui communique avec une conduite de réfrigérant (33), par une dérivation (39).

**12.** Dispositif selon la revendication 3, caractérisé en ce que le bouclier (3) est pourvu d'appuis (7) qui peuvent être pressés contre la paroi intérieure de la canalisation (4).

**13.** Dispositif selon la revendication 12, caractérisé en ce que les appuis (7) sont placés sur le bouclier (3), à la manière d'un appui à trois points.

**14.** Dispositif selon l'une des revendications 12 ou 13, caractérisé en ce que les appuis (7) dépassent de la paroi extérieure du bouclier (3).

**15.** Dispositif selon la revendication 3, caractérisé en ce que le contour extérieur de la section transversale du bouclier (3) correspond au contour intérieur de la section transversale de la canalisation (4), la surface correspondante de la section transversale du bouclier (3) étant inférieure à celle de la canalisation (4).

**16.** Dispositif selon la revendication 4, caractérisé en ce qu'une conduite de réfrigérant débouchant dans la zone de la tête de fraisage (1) et/ou une conduite de produit de lavage sortant dans la zone de la face frontale de l'arbre creux (8) tournée vers la tête de fraisage (1), est guidée à travers l'arbre creux (8).

**17.** Dispositif selon les revendications 2 ou 3, caractérisé en ce que le dispositif d'avance (5) est relié au bouclier (3) par des vérins hydrauliques (13) et en ce que dans le plan horizontal sont prévus des étançons (18) pouvant être pressés contre la paroi de la canalisation (4), qui sont également actionnés hydrauliquement.

**18.** Dispositif selon les revendications 2 ou 17, caractérisé en ce que le dispositif d'avance (5) est monté sur un longeron de guidage (14) s'étendant dans la direction de l'axe médian de l'arbre creux (8), les vérins hydrauliques (13) s'étendant dans deux plans horizontaux, chacun des deux côtés du longeron de guidage (14).

**19.** Dispositif selon la revendication 2, caractérisé en ce que le dispositif d'avance (5) est réglable verticalement.

**20.** Dispositif selon la revendication 2, caractérisé en ce que le convoyeur (6) est un dispositif à aspiration pourvu d'une pompe d'aspiration.

## Claims

**1.** A method of milling out the inside wall of a conduit which is laid underground, wherein a milling head is guided with a rotary movement corresponding to the cross-sectional contour of the inside wall and after a revolution over the entire periphery of the inside wall is advanced by its milling head width in the longitudinal axial direction of the conduit, and wherein a multiplicity of juxtaposed grooves is milled in a revolution, during the advance movement of the milling head the intermediate land portions produced are sheared off in the longitudinal axial direction of the conduit and the waste material produced is conveyed away by means of a conveyor device.

**2.** Apparatus for carrying out the method according to claim 1 wherein a milling head (1) has a multiplicity of juxtaposed rotary rows of teeth (28) which are arranged at a spacing relative to each other, that there is provided a cutting edge (2) which is adapted to the cross-sectional contour of the milled-out inside wall and which is connected to an advance means (5) which can be braced in the conduit (4), and that provided on the side which is towards the bottom of the conduit is a conveyor device (6) for conveying away the waste material.

3. Apparatus according to claim 2 characterised in that the cutting edge (2) is fixed to a shell casing (3) which extends over the periphery of the inside wall and which is connected to the advance means (5), wherein the shell casing (3) can be braced in the conduit (4) alternately with the advance means (5).

4. Apparatus according to claim 2 characterised in that the milling head (1) is disposed on a radially movable adjusting drive which is coupled to a control means and which is mounted rotatably on a hollow shaft (8).

5. Apparatus according to claim 4 characterised in that the adjusting drive is formed from a hydraulic cylinder (9), a pneumatic drive or an adjusting motor.

6. Apparatus according to claim 3 characterised in that the cutting edge (2) is releasably connected to the shell casing (3).

7. Apparatus according to claim 2 characterised in that the milling head (2) is drivable by way of a hydraulic motor (11), wherein a transmission (10) is connected between the hydraulic motor and the milling head (1).

8. Apparatus according to claim 2 or claim 7 characterised in that the structural unit consisting of the hydraulic motor (11), the transmission (10) and the milling head (1) is fixed to a guide tube (16) which is guided reciprocatably in guide sleeves (17) connected to the hollow shaft (8).

9. Apparatus according to claim 2 characterised in that the milling head (1) has a hub (23) which is provided with a plurality of peripherally extending annular grooves (24) which extend transversely to the longitudinal axis of the hub (23) and which are arranged parallel and at a spacing from each other and in each of which a cutting blade (27) provided with a row of teeth (28) is non-rotatably held.

10. Apparatus according to claim 9 characterised in that the hub (23) is provided with longitudinal grooves (25) distributed on its outer periphery and the cutting blades (27) are provided with longitudinal grooves (26) distributed in the region of the respective central hole in each thereof, the longitudinal grooves (25, 26) extending in the longitudinal direction of the hub (23) and approximately corresponding to each other in respect of their cross-sectional dimension, wherein the spacing between the longitudinal grooves (25, 26) is equal to or smaller than the width thereof, and that a key (30) is engaged in the longitudinal grooves (25, 26) of the hub (23) and the cutting blades (27), the grooves being aligned in the position of use.

11. Apparatus according to claim 9 characterised in that at least one coolant passage (34) opens into each annular groove (24), the coolant passage being in communication with a coolant conduit (33) by way of a branch passage (39).

12. Apparatus according to claim 3 characterised in that the shell casing (3) is provided with supports (7) which can be pressed against the inside wall of the conduit (4).

13. Apparatus according to claim 12 characterised in that the supports (7) are arranged in the manner of a three-point contact means on the shell casing (3).

14. Apparatus according to one of claims 12 and 13 characterised in that the supports (7) project beyond the outside wall of the shell casing (3).

15. Apparatus according to claim 3 characterised in that the outer cross-sectional contour of the shell casing (3) corresponds to the inner cross-sectional contour of the conduit (4), wherein the corresponding cross-sectional area of the shell casing (3) is smaller than that of the conduit (4).

16. Apparatus according to claim 4 characterised in that extending through the hollow shaft (8) is a coolant feed conduit which opens in the region of the milling head (1) and/or a flushing agent conduit which issues in the region of the end of the hollow shaft (8), which is towards the milling head (1).

17. Apparatus according to claim 2 or claim 3 characterised in that the advance means (5) is connected to the shell casing (3) by way of hydraulic cylinders (13) and that there are provided rams (18) which can be pressed in the horizontal plane against the wall of the conduit (4) and which are also hydraulically actuable.

18. Apparatus according to claim 2 or claim 17 characterised in that the advance means (5) is mounted on a guide beam member (14) which extends in the central axial direction of the hollow shaft (8), wherein the hydraulic cylinders (13) are arranged to extend in two horizontal planes on respective sides of the guide beam member (14).

19. Apparatus according to claim 2 characterised in that the advance means (5) is vertically displaceable.

20. Apparatus according to claim 2 characterised in that the conveyor device (6) is in the form of a suction removal device provided with a suction pump.

Fig.1

Fig. 2

Fig. 3

Fig.4

Fig. 5

Fig. 6

24    24

23    25

24    25

41    41

25

24

*Fig. 7*

25    23

41    41

25

41    *Fig. 8*